# EUROPÄISCHE PATENTSCHRIFT

(11) **EP 2 517 188 B1**
(45) Veröffentlichungstag und Bekanntmachung des Hinweises auf die Patenterteilung: **25.03.2015**
(21) Anmeldenummer: 11716168.7
(22) Anmeldetag: 03.03.2011
(51) Int. Cl.: G08C 19/38, H04Q 9/00, F01D 17/02, F01D 21/00

(54) **TELEMETRIEANORDNUNG ZUR DATENÜBERMITTLUNG VON EINEM ROTIERENDEN BAUTEIL**
TELEMETRY ARRANGEMENT FOR TRANSFERRING DATA FROM A ROTATING COMPONENT
SYSTÈME DE TÉLÉMÉTRIE POUR LA TRANSMISSION DE DONNÉES DEPUIS UNE PIÈCE EN ROTATION

(30) Priorität: 09.03.2010 DE 102010015889
(43) Veröffentlichungstag der Anmeldung: 31.10.2012
(73) Patentinhaber: AneCom AeroTest GmbH, 15745 Wildau (DE)
(72) Erfinder: DAUM, Carsten, 12489 Berlin (DE); PREUSS, Stefan, Volker, 15745 Wildau (DE)
(74) Vertreter: adares Patent- und Rechtsanwälte Reininger & Partner
(86) Internationale Anmeldenummer: PCT/DE2011/075035
(87) Internationale Veröffentlichungsnummer: WO 2011/110170

(56) Entgegenhaltungen:
- EP-A2- 1 843 011
- US-A- 4 446 461
- US-A1- 2002 118 120

## Beschreibung

Die Erfindung betrifft eine Telemetrieanordnung zur Datenübermittlung von einem rotierenden Bauteil, beispielsweise einem Rotor einer Gasturbine, die einen in einem Telemetriegehäuse beidseitig auf Lagern drehbar gelagerten und an das rotierende Bauteil gekoppelten Telemetrierotor mit einem zentralen Kabelkanal, eine an den Telemetrierotor gekoppelte und mit einer Sendeantenne verbundene Telemetrieelektronik, in dem Kabelkanal verlaufende, mit der Telemetrieelektronik und am rotierenden Bauteil angebrachten Sensoren verbundene Sensorkabel sowie eine stationäre Empfangsantenne umfasst

Telemetriesysteme der eingangs erwähnten Art werden beispielsweise zur Untersuchung von in einem Prüfstand angeordneten Verdichter- oder Turbinenrotoren (Versuchsträger) eingesetzt, um in Abhängigkeit von der jeweiligen Rotationsgeschwindigkeit auftretende Schwingungen, Spannungen, Temperaturen, Drücke oder andere Messdaten zu erfassen. Es können einzelne Rotoren, aber auch komplette Triebwerke untersucht werden. Die zu diesem Zweck eingesetzten bekannten Telemetrieanordnungen sind zum einen insofern nachteilig, als aufgrund einer ungleichmäßigen Lastverteilung der rotierenden Telemetriebauteile Lagerüberlastungen auftreten, die letztlich zu einer Verringerung der Lebensdauer des Telemetriesystems führen können. Wesentlichen Einfluss auf die Unwuchtbelastung des Telemetriesystems haben die im Telemetrierotor verlegten, die Sensoren mit der Telemetrieelektronik verbindenden Sensorkabel, deren Anzahl in Abhängigkeit von dem zu untersuchenden Rotor zudem unterschiedlich sein kann.

Die durch die Sensorkabel verursachte Unwuchtbelastung kann so groß sein, dass das Telemetriesystem nicht in dem zur Untersuchung des Rotors erforderlichen Drehzahlbereich betrieben werden kann. Eine hohe Lagerbelastung und die durch das rotierende Telemetriesystem in Rotation versetzte und komprimierte Luft bewirken darüber hinaus eine Temperaturerhöhung, die sich zum einen nachteilig auf die Funktion der Lager des Telemetrierotors auswirkt und sogar zu deren Zerstörung führen kann und zum anderen einen Ausfall der auf Halbleitern basierenden Elektronik des Telemetriesystems zur Folge haben kann.

Eine derartige Telemetrieanordnung ist aus der Patentschrift US2002/118120 bekannt.

Der Erfindung liegt die Aufgabe zugrunde, eine Telemetrieanordnung zur Datenübermittlung von rotierenden Bauteilen, beispielsweise von auf einem Prüfstand mit hoher Geschwindigkeit rotierenden Rotoren einer Gasturbine, anzugeben, die kompakt ausgebildet ist und ein geringes Gewicht aufweist und - auch bei der Untersuchung unterschiedlich ausgebildeter Rotoren mit den maximal erforderlichen Drehzahlen - eine minimierte Wärmeentwicklung und eine hohe Funktionssicherheit der Lagerung des Telemtrierotors und der mit dieser verbundenen Telemetrieelektronik sowie eine lange Lebensdauer des Telemetriesystems gewährleistet.

Erfindungsgemäß wird die Aufgabe mit einer gemäß den Merkmalen des Patentanspruchs 1 ausgebildeten Telemetrieanordnung gelöst.

Vorteilhafte Weiterbildungen und zweckmäßige Ausgestaltungen der Erfindung sind Gegenstand der Unteransprüche.

Der Grundgedanke der Erfindung besteht darin, dass der Telemetrierotor einen vorderen und einen hinteren Rotorteil umfasst, die über eine Hohlschaft-Kegelverbindung lösbar aneinander gefügt sind und zwischen den beiden Lagern des Telemetrierotors sowohl die Telemetrieelektronik als auch die Senderantenne aufnehmen, so dass sich der Massenschwerpunkt etwa mittig zwischen den beiden Lagern befindet. Die Hohlschaft-Kegelverbindung erfolgt unter Bildung eines die Telemetrieelektronik aufnehmenden Hohlraums und eines Befestigungsflansches für die Sendeantenne. Der zentrisch im Telemetrierotor verlaufende Kabelkanal wird durch eine austauschbar im Telemetrierotor anbringbare Kabelführungshülse mit für den betreffenden Anwendungsfall, das heißt jeweils an die Anzahl der in dem Kabelkanal angeordneten Sensorkabel angepasstem Innendurchmesser gebildet ist. Der so ausgebildete Telemetrierotor weist neben einem geringen Gewicht und einer kompakten Bauweise ein optimales Wuchtverhalten auf, so dass dessen Betrieb bei hohen Drehzahlen und eine hohe Lebensdauer gewährleistet sind. Die Hohlschaft-Kegelverbindung der beiden Rotorteile ist bezüglich der Lebensdauer und des Wuchtverhaltens auch insofern vorteilhaft, als diese spielfreie Verbindung auf einfache Art mehrfach - und zwar im Wesentlichen verschleißfrei - getrennt und wieder zusammengefügt werden kann. Die beiden Bauteile schließen sich bei Rotation selbsttätig ohne Passungsverlust im Betrieb. Die geteilte, durch eine Hohlkegelpressverbindung verbundene Ausführung des Telemetrierotors ermöglicht somit eine einfache Montage und Demontage der Telemetrieelektronik.

In weiterer Ausbildung der Erfindung ist der Telemetrierotor in dem diesen umgebenden Telemetriegehäuse an einem Festlager und einem Loslager gelagert, um dadurch die unterschiedliche Wärmedehnung der statischen und rotierenden Bauteile der Telemetrieanordnung zu kompensieren und somit die Belastung der Lager zu minimieren und letztlich deren Lebensdauer zu verlängern.

In vorteilhafter Weiterbildung der Erfindung sind die Telemetrieelektronik und die Sendeantenne zur weiteren Vereinfachung der Montage und Demontage über Steckverbinder im Telemetrierotor verbunden.

In zweckmäßiger Ausgestaltung der Erfindung sind in den Telemetrierotor mit einem Gewindeabschnitt versehene Wuchtbohrungen zum Anbringen von Wuchtgewichten ausgebildet. Den am vorderen Rotorteil stirnseitig eingeformten Wuchtbohrungen sind in dem diesen gegenüberliegenden Bereich des Telemetriegehäuses mit einem Verschluss verschließbare Öffnungen zum Anbringen der Wuchtgewichte zugeordnet. Gegebenenfalls verbleibende Unwuchten können somit noch auf einfache Art ausgeglichen werden.

Gemäß einem weiteren Merkmal der Erfindung ist auch das Telemetriegehäuse zweiteilig ausgebildet und umfasst einen vorderen und einen hinteren Gehäuseteil, die über eine Hohlschaft-Kegelverbindung lösbar aneinander gefügt sind. Auch dieses Merkmal gewährleistet bei einer an den jeweiligen Anwendungsfall erforderlichen Umrüstung des Telemetrierotors ein schnelles und einfaches Austauschen der Telemetrieelektronik oder der zur Erweiterung oder Verengung des Kabelkanals im Telemetrierotor austauschbar angebrachten Kabelführungshülse

Gemäß einem weiteren Merkmal der Erfindung sind in den das Festlager und das Loslager aufnehmenden Stirnseiten des Telemetriegehäuses Luftzuführungskanäle zur Zuführung von Kühlluft zu den Lagern und in den zwischen dem Telemetriegehäuse und dem Telemetrierotor vorhandenen Raum zur Wärmeabfuhr über in dem Telemetriegehäuse vorgesehene Luftauslassöffnungen ausgebildet. Dadurch wird Funktionsstörungen der Lager und der Telemetrieelektronik aufgrund zu hoher Temperaturen begegnet und deren Lebensdauer erhöht.

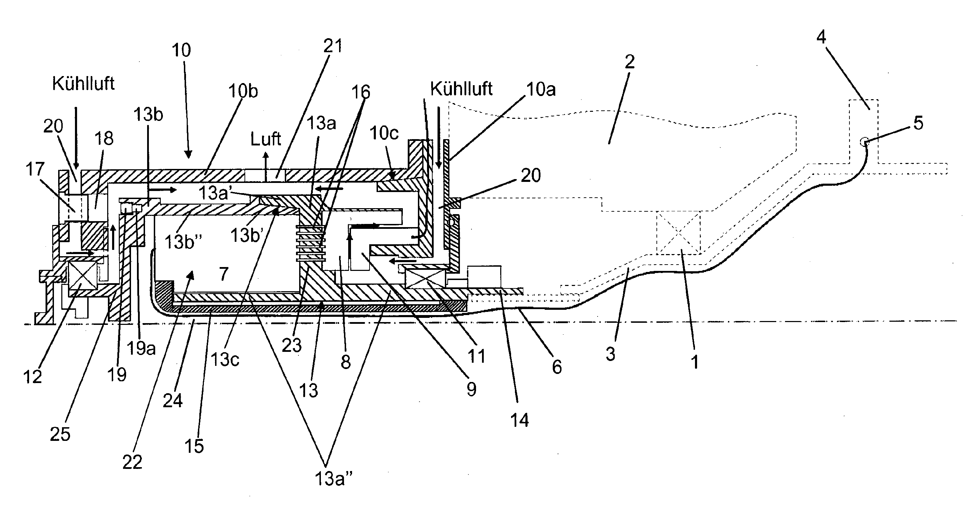

Ein Ausführungsbeispiel der Erfindung wird anhand der Zeichnung, in deren einziger Figur in einem Halbschnitt eine Telemetrieanordnung zur Bearbeitung und Übertragung der an einem in einem Prüfstand angeordneten Rotor erfassten Messdaten dargestellt ist, näher erläutert.

In der Zeichnung ist schematisch ein - strichliert gezeichneter - Versuchsträger, das heißt ein auf Lagern 1 in einem Gehäuse 2 drehbar gelagertes rotierendes Bauteil 3 (beispielsweise ein Rotor) für den Verdichter eines Flugtriebwerks) dargestellt. An den an dem rotierenden Bauteil 3 in Umfangsrichtung angeordneten Rotorschaufeln 4 ist eine Vielzahl von Sensoren 5 zur Messung von Schwingungen, Spannungen, Temperaturen, Drücken und dergleichen angeordnet, um entsprechend der jeweiligen Belastung des rotierenden Bauteils 3 eine Aussage über den Zustand des Versuchsträgers treffen zu können. Über mit den Sensoren 5 verbundene Sensorkabel 6 werden die bei der Messung erzeugten elektrischen Signale zu einer mit dem rotierenden Bauteil verbundenen Telemetrieelektronik 7 (Telemetrie-/Transmittermodul) geleitet, um die Signale zu verarbeiten und - über ein Antennensystem aus einer rotierenden Sendeantenne 8 und einer stationären Empfangsantenne 9 nach außen zu übertragen und dort auswerten zu können. Die Telemetrieelektronik 7 und die Sende- und Empfangsantenne 8, 9 sind Bestandteil eines Telemetriesystems, das einen in einem Telemetriegehäuse 10 auf einem Festlager 11 und einem Loslager 12 drehbar gelagerten, die Telemetrieelektronik 7 und die Sendeantenne 8 aufnehmenden Telemetrierotor 13 umfasst. Die Kombination aus einem Loslager 12 und einem Festlager 11 verringert die durch thermische Dehnung des Telemetriegehäuses 10 und des Telemetrierotors 13 bedingte Lagerbelastung. Der Telemetrierotor 13 ist über eine Verbindungswelle 14 mit dem hier zu untersuchenden rotierenden Bauteil 3 (Versuchsträger) lösbar verbunden.

Um die Telemetrieelektronik 7 und die Sendeantenne 8 in einen zwischen dem Festlager 11 und dem Loslager 12 des Telemetrierotors 13 liegenden Bereich zu verlegen und darüber hinaus einen einfachen Zugang zur Telemetrieelektronik 7 zu gewährleisten, umfasst der Telemetrierotor 13 einen an den Versuchsträger anschließenden hinteren Rotorteil 13a und einen vorderen Rotorteil 13b, die über eine Hohlschaft-Kegelverbindung 13c miteinander verbunden sind. Mit dem aus zwei Rotorteilen bestehenden Telemetrierotor 13 werden ein Hohlraum 22 zur Aufnahme der Telemetrieelektronik 7 sowie ein Befestigungsflansch 23 zum Anbringen der Sendeantenne 8 geschaffen, so dass der Massenschwerpunkt des Telemetrierotors 13 zwischen den beiden Lagern liegt. Das Telemetriegehäuse 10 besteht auch aus einem vorderen Gehäuseteil 10b und einem hinteren Gehäuseteil 10a, die durch eine Hohlschaft-Kegelverbindung 10c aneinander gefügt sind. Die Hohlschaft-Kegelverbindungen 10c, 13c lassen ein nahezu verschleißfreies sowie reproduzierbares Trennen und Zusammenfügen der beiden Gehäuseteile 10a, 10b bzw. Rotorteile 13a, 13b zu, so dass ein häufiger und einfacher Zugang zu der in das Innere des als zweiteiliger Hohlkörper ausgebildeten Telemetrierotors 13 integrierten und somit zwischen dem Loslager 12 und dem Festlager 11 angeordneten Telemetrieelektronik 7 und eine lange Lebensdauer der spielfreien Kegelverbindung 13c gewährleistet sind. Bei dem Telemetrierotor 13 wird aufgrund der Kegelverbindung 13c zudem die Gefahr des Auftretens von Unwuchten nach dem Zusammenbauen der beiden Rotorteile 13a, 13b minimiert und bei der Rotation des Telemetrierotors 13 bleibt die Kegelverbindung 13c geschlossen und verhindert somit im Betrieb des Telemetriesystems Passungsverluste im Verbindungsbereich.

Das hintere Rotorteil 13a umfasst einen an dem Festlager 11 abgestützten rohrförmigen Abschnitt 13a", an dessen Innenfläche die jeweilige Kabelführungshülse 15 anbringbar ist und von dessen Außenfläche ein Befestigungsflansch 23 mit einem von dessen Rand abstrebendem, im Querschnitt kegelförmigem Verbindungstück 13a' ausgeht. Das vordere Rotorteil 13b umfasst einen Rohrabschnitt 13b", der über einen an dessen hinterem Rand angeformten Lagerflansch 25 am Loslager 12 abgestützt ist, und der an seinem dem kegelförmigen Verbindungsstück 13a' zugewandten vorderen Rand einen kegelförmigen Verbindungsabschnitt 13b' zur Herstellung der Hohlschaft-Kegelverbindung (13c) aufweist. Die Telemetrieelektronik 7 ist in dem zwischen dem rohrförmigen Abschnitt 13a" und dem zwischen dem Rohrabschnitt 13b" gebildeten nach vorn offenen Hohlraum 22 untergebracht.

Ein wesentlicher Vorteil des aus jeweils zwei Rotorteilen 10a, 10b über eine Kegelverbindung 13c zusammengesetzten, hohl ausgeführten Telemetrierotors 13 besteht darin, dass die Telemetrieelektronik 7 in den Telemetrierotor 13 einsetzbar ist und dennoch für eine Montage oder Demontage leicht zugänglich ist und der Massenschwerpunkt des mit hoher Geschwindigkeit rotierenden Telemetrierotors 13 zwischen den Los- und Festlagern 12, 11 positioniert ist, um dadurch das rotordynamische Verhalten der rotierenden Teile der Telemetrieanordnung zu verbessern und auch bei hohen Drehzahlen und gegebenenfalls auftretenden Unwuchten eine gleichmäßige Lastverteilung und eine lange Lebensdauer des Telemetriesystems zu gewährleisten.

In der Zeichnung ist der besseren Anschaulichkeit halber nur ein Sensorkabel 6 dargestellt. Tatsächlich ist jedoch eine Vielzahl von Sensorkabeln zur Weiterleitung der elektrischen Signale von einer Vielzahl von Sensoren zu der Telemetrieelektronik 7 erforderlich. In Abhängigkeit von dem zu untersuchenden Versuchsträger (rotierendes Bauteil 3) und der Art der Messung schwankt jedoch die Größe der durch einen zentralen Kabelkanal 24 des Telemetrierotors 13 geführten Sensorkabelbündel, so dass erhebliche, mit einer erhöhten Lagerbelastung und letztlich einer Verringerung der Lebensdauer des Telemetriesystems einhergehende Unwuchten bei der Rotation des Telemetrierotors 13 auftreten könnten. Dieser Gefahr wird hier jedoch dadurch begegnet, dass der Kabelkanal durch eine zentrisch in den Telemetrierotor 13 einsetzbare, austauschbare Kabelführungshülse 15 mit jeweils an die Anzahl der in dieser geführten Sensorkabel 6 angepasstem - unterschiedlich großem - Innendurchmesser gebildet wird. Die bezüglich des Innendurchmessers variablen Kabelführungshülsen 15 sorgen für eine gleichbleibende zentrische Lage der Sensorkabel 6 in dem Telemetrierotor 13 und minimieren somit auf die Sensorkabel zurückgehende Unwuchten.

Die Telemetrieelektronik 7 (Transmittermodule) ist über Steckverbinder 16 in den hohl ausgebildeten Telemetrierotor 13 eingebunden bzw. mit der Sendeantenne 8 verbunden, so dass auch dadurch eine einfache und zeitsparende Montage und Demontage der Telemetrieelektronik 7 möglich ist.

Das Telemetriegehäuse 10 weist an der Stirnseite des vorderen Gehäuseteils 10b eine mit einem Verschluss 17 verschließbare Öffnung 18 auf, um den Zugang zu in der Stirnseite des vorderen Rotorteils 13b des Telemetrierotors 13 ausgebildeten - abgesetzten und mit einem Gewindeabschnitt 19a versehenen - Wuchtbohrungen 19 zu ermöglichen und gegebenenfalls vorhandene Unwuchten durch Einschrauben von Wuchtgewichten zu beseitigen.

Um die im Betrieb des Telemetriesystems zum einen durch die Fest- und Loslager 11, 12 und zum anderen durch die Luftbewegung und -verdichtung infolge der Rotation des Telemetrierotors 13 erzeugte Wärme, die die Funktion der Lager und damit des Telemetriesystems entscheidend beeinträchtigen kann, aus dem Telemetriegehäuse 10 abzuführen, sind in dem hinteren und vorderen Gehäuseteil 10a, 10b Luftzuführungskanäle 20 ausgebildet. Die zugeführte Kühlluft bewirkt eine Kühlung im Bereich des Fest- und des Loslagers 11, 12 und darüber hinaus eine Abführung der durch die Drehbewegung des Telemetrierotors 13 erwärmten Luft aus dem Inneren des Telemetriegehäuses 10 über in der Gehäusewand vorgesehene Luftauslassöffnungen 21.

Mit der zuvor beschriebenen, bei unterschiedlichen Rotoren am Wellenende anbringbaren, das heißt universell einsetzbaren Telemetrieanordnung, die sich durch ein geringes Gewicht und eine kompakte Bauweise sowie durch minimierte Unwuchten, eine verringerte Lagerbelastung und Erwärmung und eine stabile Drehbewegung bei hohen Drehzahlen und letztlich durch eine lange Lebensdauer auszeichnet, kann eine Vielzahl unterschiedlicher Rotorparameter simultan erfasst werden.

### Bezugszeichenliste

- 1: Lager
- 2: Gehäuse
- 3: rotierendes Bauteil (Versuchsträger)
- 4: Rotorschaufel
- 5: Sensor
- 6: Sensorkabel
- 7: Telemetrieelektronik (Telemetrie-/Transmittermodul)
- 8: rotierende Sendeantenne
- 9: stationäre Empfangsantenne
- 10: Telemetriegehäuse
- 10a: hinterer Gehäuseteil
- 10b: vorderer Gehäuseteil
- 10c: Hohlschaft-Kegelverbindung von 10
- 11: Festlager
- 12: Loslager
- 13: Telemetrierotor
- 13a: hinterer Rotorteil
- 13a': kegelförmiges Verbindungsstück
- 13a'': rohrförmiger Abschnitt
- 13b: vorderer Rotorteil
- 13b': kegelförmiger Verbindungsabschnitt
- 13b": Rohrabschnitt
- 13c: Hohlschaft-Kegelverbindung von 13
- 14: Verbindungswelle
- 15: austauschbare Kabelführungshülse
- 16: Steckverbinder
- 17: Verschluss
- 18: Öffnung in 10b
- 19: Wuchtbohrung in 13b, 25
- 19a: Gewindeabschnitt
- 20: Luftzuführungskanal
- 21: Luftauslassöffnung
- 22: Hohlraum
- 23: Befestigungsflansch
- 24: Kabelkanal
- 25: Lagerflansch

## Patentansprüche

1. Telemetrieanordnung zur Datenübermittlung von einem rotierenden Bauteil, beispielsweise einem Rotor einer Gasturbine, die einen in einem Telemetriegehäuse (10) beidseitig auf Lagern (11, 12) drehbar gelagerten und an das rotierende Bauteil (3) gekoppelten Telemetrierotor (13) mit einem zentralen Kabelkanal (24), eine an den Telemetrierotor (13) gekoppelte und mit einer Sendeantenne (8) verbundene Telemetrieelektronik (7), in dem Kabelkanal (24) verlaufende, mit der Telemetrieelektronik (7) und am rotierenden Bauteil (3) angebrachten Sensoren (5) verbundene Sensorkabel (6) sowie eine stationäre Empfangsantenne (9) umfasst, **dadurch gekennzeichnet, dass** der Telemetrierotor (13) einen vorderen und einen hinteren Rotorteil (13b, 13a) umfasst, die über eine Hohlschaft-Kegelverbindung (13c) unter Bildung eines die Telemetrieelektronik (7) aufnehmenden Hohlraums (22) und eines Befestigungsflansches (23) für die Sendeantenne (8) lösbar aneinander gefügt sind, wobei sich der Massenschwerpunkt des Telemetrierotors (13) zwischen den beiden Lagern (11, 12) befindet, und dass der zentrale Kabelkanal (24) durch eine austauschbar im Telemetrierotor (13) befestigte Kabelführungshülse (15) mit für den betreffenden Anwendungsfall jeweils an die Anzahl der durch diese geführten Sensorkabel (6) angepasstem Innendurchmesser gebildet ist.

2. Telemetrieanordnung nach Anspruch 1, **dadurch gekennzeichnet, dass** der Telemetrierotor (13) in dem diesen umgebenden Telemetriegehäuse (10) an einem Festlager (11) und einem Loslager (12) gelagert ist.

3. Telemetrieanordnung nach Anspruch 1, **dadurch gekennzeichnet, dass** die Telemetrieelektronik (7) und die Sendeantenne (8) über Steckverbinder (16) an den Telemetrierotor (13) angeschlossen sind.

4. Telemetrieanordnung nach Anspruch 1, **dadurch gekennzeichnet, dass** in den Telemetrierotor (13) mit einem Gewindeabschnitt (19a) versehene Wuchtbohrungen (19) zum Anbringen von Wuchtgewichten ausgebildet sind.

5. Telemetrieanordnung nach Anspruch 4, **dadurch gekennzeichnet, dass** den am vorderen Rotorteil (13b) stirnseitig eingeformten Wuchtbohrungen (19) in dem diesen gegenüberliegenden Bereich des Telemetriegehäuses (10) mit einem Verschluss (17) verschließbare Öffnungen (18) zum Zuführen der Wuchtgewichte zugeordnet sind.

6. Telemetrieanordnung nach Anspruch 1, **dadurch gekennzeichnet, dass** das Telemetriegehäuse (10) zweiteilig ausgebildet ist und einen vorderen und einen hinteren Gehäuseteil (10b, 10a) umfasst, die über eine Hohlschaft-Kegelverbindung (10c) lösbar aneinander gefügt sind.

7. Telemetrieanordnung nach Anspruch 1, **dadurch gekennzeichnet, dass** in die das Festlager (11) und das Loslager (12) aufnehmenden Stirnseiten des Telemetriegehäuses (10) Luftzuführungskanäle (20) zur Zuführung von Kühlluft zu den Lagern und in den zwischen dem Telemetriegehäuse (10) und dem Telemetrierotor (13) vorhandenen Raum zur Wärmeabfuhr über in dem Telemetriegehäuse (10) vorgesehene Luftauslassöffnungen (21) ausgebildet sind.

8. Telemetrieanordnung nach Anspruch 1, **dadurch gekennzeichnet, dass** das hintere Rotorteil (13a) einen an dem Festlager (11) abgestützten rohrförmigen Abschnitt (13a'') umfasst, an dessen Innenfläche die jeweilige Kabelführungshülse (15) anbringbar ist und von dessen Außenfläche der Befestigungsflansch (23) mit einem von dessen Rand abstrebendem, im Querschnitt kegelförmigem Verbindungstück (13a') ausgeht, und dass das vordere Rotorteil (13b) einen Rohrabschnitt (13b") umfasst, der über einen an dessen vorderem Rand angeformten Lagerflansch (25) am Loslager (12) abgestützt ist, und der an seinem dem kegelförmigen Verbindungsstück (13a') zugewandten hinteren Rand einen kegelförmigen Verbindungsabschnitt (13b') zur Herstellung der Hohlschaft-Kegelverbindung (13c) aufweist, wobei die Telemetrieelektronik (7) in dem zwischen dem rohrförmigen Abschnitt (13a") und dem Rohrabschnitt (13b") gebildeten, nach vorn offenen Hohlraum (22) untergebracht ist.

## Claims

1. A telemetry arrangement for transferring data from a rotating component, for example a rotor of a gas turbine, comprising a telemetry rotor (13) having a central cable duct (24) and being coupled to the rotating component (3) and mounted rotatably on bearings (11, 12) on both sides in a telemetry housing (10), a telemetry electronic system (7) connected to a transmitting antenna (8) and coupled to the telemetry rotor (13), sensor cables (6) connected to sensors (5) fixed to the rotating component (3) and to the telemetry electronic system (7) and running into the cable duct (24) as well as a stationary receiving antenna (9), **characterized in that** the telemetry rotor (13) comprises a front and back rotor part (13b, 13a) being connected to each other in a detachable manner by means of a hollow shank taper connection (13c) by formation of a hollow space housing the telemetry electronic system (7) and a mounting flange (23) for the transmitting antenna (8), wherein the center of mass of the telemetry rotor (13) is between the two bearings (11, 12), and that the central cable duct (24) is formed by a cable conducting sleeve (15) which is fastened in an exchangeable manner to the telemetry rotor (13) and has an inner diameter adapted respectively in the corresponding application case to the number of the sensor cables (6) conducted through it.

2. The telemetry arrangement according to claim 1, **characterized in that** the telemetry rotor (13) is mounted in the telemetry housing (10) sourrounding it to a locating bearing (11) and a non-locating bearing (12).

3. The telemetry arrangement according to claim 1, **characterized in that** the telemetry electronic system (7) and the transmitting antenna (8) are joint to the telemetry rotor (13) by means of connectors (16).

4. The telemetry arrangement according to claim 1, **characterized in that** balancing drillings (19) provided with a thread section (19a) are formed in the telemetry rotor (13) for mounting balancing weights.

5. The telemetry arrangement according to claim 4, **characterized in that** to the balancing drillings (19) formed in the face side at the front rotor part (13b) are assigned in the region of the telemetry housing (10) opposite thereto openings (18) closeable by a closure (17) for introducing the balancing weights.

6. The telemetry arrangement according to claim 1, **characterized in that** the telemetry housing (10) has a two-part form and comprises a front and a back housing part (10b, 10a) being connected to each other by a hollow shank taper connection (10c) in a detachable manner.

7. The telemetry arrangement according to claim 1, **characterized in that** in the front faces of the telemetry housing (10) housing the locating bearing (11) and the non-locating bearing (12) are formed air supply channels (20) for supply of cooling air to the bearings and in the space existing between the telemetry housing (10) and the telemetry rotor (13) for heat dissipation by air exhaust openings (21) provided in the telemetry housing (10).

8. The telemetry arrangement according to claim 1, **characterized in that** the back rotor part (13a) comprises a tubular section (13a") supported by the locating bearing (11), to which inner surface the respective cable conducting sleeve (15) is mountable and from which outer surface the clamping flange (23) with a connecting piece (13a') having in cross-section a cone shape and bracing from the edge of it extends and that the front rotor part (13b) comprises a pipe section (13b") being supported by a bearing flange (25) formed to its front edge at the non-locating bearing (12) and having at its back edge facing the cone-shaped connecting piece (13a') a cone-shaped connecting section (13b') for manufacture of the hollow shank taper connection (13c), wherein the telemetry electronic system (7) is housed in the hollow space (22) having an open front and being formed between the tubular section (13a") und the pipe section (13b").

## Revendications

1. Un système de télémétrie pour la transmission de données depuis un composant rotatif, par exemple un rotor d'une turbine à gaz, comprenant un rotor de télémétrie (13) qui a un conduit de câbles central (24) et est couplé au composant rotatif (3) et monté de manière rotative de deux côtés sur des paliers (11, 12) dans un boîtier de télémétrie (10), une électronique de télémétrie (7) qui est connectée à une antenne d'émission (8) et couplée au rotor de télémétrie (13), des câbles capteurs (6) qui sont connectés à des capteurs (5) montés au composant rotatif (3) et à l'électronique de télémétrie (7) et passent dans le conduit de câbles (24), et une antenne de réception stationnaire (9), caractérise en ce que le rotor de télémétrie (13) comprend des parts de rotor antérieure et postérieure (13a, 13b) jointes l'une à l'autre de manière détachable par une assemblage conique de tige creuse (13c) en formant une cavité (22) intégrant l'électronique de télémétrie (7) et une bride de fixation (23) pour l'antenne d'émission (8), le centre de gravité du rotor de télémétrie (13) étant entre les deux paliers (11, 12), et que le conduit de câbles central (24) est formé par une douille de guidage pour câbles (15) qui est attachée de manière échangeable dans le rotor de télémétrie (13) et a respectivement pour le cas d'application en question un diamètre intérieur adapté au nombre des câbles capteurs (6) guidé par celle-ci.

2. Le système de télémétrie selon la revendication 1, **caractérisé en ce que** le rotor de télémétrie (13) est monté dans le boîtier de télémétrie (10) entourant celui-ci à un palier fixe (11) et un palier libre (12).

3. Le système de télémétrie selon la revendication 1, **caractérisé en ce que** l'électronique de télémétrie (7) et l'antenne d'émission (8) sont raccordées au rotor de télémétrie (13) par des connecteurs enfichables (16).

4. Le système de télémétrie selon la revendication 1, **caractérisé en ce que** dans le rotor de télémétrie (13) sont formés des alésages d'équilibrage (19) prévus avec une section filetée (19a) pour monter des poids d'équilibrage.

5. Le système de télémétrie selon la revendication 4, **caractérisé en ce qu'**aux alésages d'équilibrage (19) formés à la partie antérieure du rotor (13b) aux faces dans la région opposée de ceux-ci du boîtier de télémétrie (10) sont attribuées des ouvertures (18) fermant à fermeture (17) pour amener les poids d'équilibrage.

6. Le système de télémétrie selon la revendication 1, **caractérisé en ce que** le boîtier de télémétrie (10) est formé en deux pièces et comprend des parts de boîtier antérieure et postérieure (10b, 10a) qui sont jointes l'une à l'autre de manière détachable par une assemblage conique de tige creuse (10c).

7. Le système de télémétrie selon la revendication 1, **caractérisé en ce que** dans les fronts du boîtier de télémétrie (10) intégrant le palier fixe (11) et le palier libre (12) sont formés des conduits de guidage pour air (20) pour amener un air de refroidissement aux paliers et dans l'espace existant entre le boîtier de télémétrie (10) et le rotor de télémétrie (13) pour évacuer une chaleur par des ouvertures de sortie pour air (21) prévues dans le boîtier de télémétrie (10).

8. Le système de télémétrie selon la revendication 1, **caractérisé en ce que** la part postérieure du rotor (13a) comprend une section tubulaire (13a") appuyée au palier fixe (11), à laquelle surface intérieure la respective douille de guidage pour câbles (15) peut être attachée et de laquelle surface extérieure la bride de fixation (23) part avec une pièce de liaison (13a') contre-boutée du bord de celle-ci et conique en coupe transversale et que la part antérieure du rotor (13b) comprend une section de tube (13b'') qui est appuyée au palier libre (12) par une bride de palier (25) formée au bord antérieur de celle-ci et qui a à son bord postérieur tourné vers la pièce de liaison conique (13a') une section de liaison conique (13b') pour fabrication de l'assemblage conique de tige creuse (13c), l'électronique de télémétrie (7) étant hébergée dans la cavité (22) ouverte à l'avant et formée entre la section tubulaire (13a") et la section de tube (13b").
